# EUROPÄISCHE PATENTSCHRIFT

(11) **EP 3 759 375 B1**
(45) Veröffentlichungstag und Bekanntmachung des Hinweises auf die Patenterteilung: **23.09.2026**
(21) Anmeldenummer: 19705926.4
(22) Anmeldetag: 05.02.2019
(51) Int. Cl.: F16F 15/14, F16F 1/32

(54) **FLIEHKRAFTPENDELEINRICHTUNG; KUPPLUNGSSCHEIBE SOWIE ANTRIEBSSTRANG**
CENTRIFUGAL PENDULUM DEVICE, CLUTCH DISC; AND POWERTRAIN
ÉQUIPEMENT DE PENDULE À FORCE CENTRIFUGE ; DISQUE D'EMBRAYAGE ET CHAÎNE CINÉMATIQUE

(30) Priorität: 01.03.2018 DE 102018104652
(43) Veröffentlichungstag der Anmeldung: 06.01.2021
(73) Patentinhaber: Schaeffler Technologies AG & Co. KG, 91074 Herzogenaurach (DE)
(72) Erfinder: FRIETSCH, Thomas, 77815 Bühl (DE); FRANZ, Evgenij, 76437 Rastatt (DE); MATTES, Julian, 78600 Kolbingen (DE); RUSCH, Alain, 67760 Gambsheim (FR); HÄSSLER, Martin, 76676 Graben-Neudorf (DE); KESSLER, Michael, 77815 Bühl (DE); THERIOT, Laurent, 67000 Strasbourg (FR); KUEN, Gerhard, 77731 Willstätt (DE); MAIER, Evgeni, 76437 Rastatt (DE); MEIER, Christian, 77855 Achern-Önsbach (DE)
(74) Vertreter: Schaeffler Technologies
(86) Internationale Anmeldenummer: PCT/DE2019/100121
(87) Internationale Veröffentlichungsnummer: WO 2019/166051

(56) Entgegenhaltungen:
- EP-A1- 3 249 258
- WO-A1-2011/008369
- WO-A1-2014/012602
- CN-A- 101 907 145
- CN-A- 104 999 000
- DE-A1- 102014 211 711
- US-A1- 2005 151 310
- GREENHILL ET AL: "NEW OPTIONS FOR WAVE SPRINGS", MACHINE DESIGN, PENTON MEDIA, CLEVELAND, OH, US, vol. 6, no. 54, 1 March 1982 (1982-03-01), pages 89 - 92, XP002019961, ISSN: 0024-9114

## Beschreibung

Die Erfindung betrifft eine Fliehkraftpendeleinrichtung für einen Antriebsstrang eines Kraftfahrzeuges, wie eines Pkws, Busses, Lkws oder sonstigen Nutzfahrzeuges, mit einem um eine Drehachse drehbaren Träger, einer derart an dem Träger entlang einer Kulissenbahn pendelbar aufgenommenen Pendelmasse, das durch die Pendelmasse im Betrieb ein einer Drehungleichförmigkeit entgegen gerichtetes Rückstellmoment erzeugt ist, einem an der Pendelmasse relativverschieblich anliegenden Kontaktelement sowie einer, das Kontaktelement in einer axialen Richtung der Drehachse an die Pendelmasse andrückenden, gewellten Federscheibe (auch als Wellscheibe bezeichnet), wie sie nach dem Verfahren hergestellt ist, wobei die Federscheibe an einem Befestigungsbereich drehfest mit dem Träger verbunden ist. Auch betrifft die Erfindung eine Kupplungsscheibe für eine Reibkupplung eines Kraftfahrzeuges sowie einen Antriebsstrang, jeweils aufweisend diese Fliehkraftpendeleinrichtung.

Fliehkraftpendeleinrichtungen sind aus dem Stand der Technik hinlänglich bekannt. Diesbezüglich offenbart bspw. die DE 10 2013 203 694 A1 eine Fliehkraftpendeleinrichtung, insbesondere für einen Antriebsstrang eines brennkraftmaschinengetriebenen Kraftfahrzeugs.

Weiterhin ist der Anmelderin interner Stand der Technik bekannt, der noch nicht veröffentlicht worden ist, jedoch bereits als deutsche Patentanmeldung am 9. März 2017 unter dem Aktenzeichen 10 2017 104 968.1 eingereicht worden ist. Hiermit sind ein Fliehkraftpendel sowie eine Antriebsanordnung für ein Kraftfahrzeug bekannt. In dem Fliehkraftpendel sind Biegefedern eingesetzt.

Bei diesen aus dem Stand der Technik eingesetzten Federscheiben hat es sich jedoch als Nachteil herausgestellt, dass diese in der Herstellung relativ aufwändig sind.

Ferner ist aus der US 2005/0151310 A1 ein Verfahren zur Herstellung einer Federscheibe mit folgenden Schritten bekannt: a) Bereitstellen eines Blechrohlings, b) Ausbilden einer Kontur der zu fertigenden Federscheibe aus dem Blechrohling, unter Ausbildung eines ringförmigen Werkstückes, c) Umformen des Werkstückes in einem geschlossenen Umformwerkzeug derart, dass abwechselnd nach oben und unten ausgestellte Finger der Federscheibe entstehen, sowie d) Entspannungsglühen des Werkstückes unter Ausbilden der Federscheibe.

Außerdem ist aus der CN 101 907 145 A ein Verfahren zur Herstellung einer gewellten Federscheibe mit folgenden Schritten bekannt: a) Bereitstellen eines Blechrohlings, b) Ausbilden einer Kontur der zu fertigenden Federscheibe aus dem Blechrohling, unter Ausbildung eines ringförmigen Werkstückes, c) Umformen des Werkstückes in einem geschlossenen Umformwerkzeug derart, dass ein in axialer Richtung gewellter Federbereich der Federscheibe entsteht, wobei ein ringförmig umlaufender Ringabschnitt den gewellten Federbereich unmittelbar mit ausbildet, sowie d) Entspannungsglühen des Werkstückes unter Ausbilden der Federscheibe.

Es ist die Aufgabe der vorliegenden Erfindung, die aus dem Stand der Technik bekannten Nachteile zu beheben und eine verbesserte Fliehkraftpendeleinrichtung für einen Antriebsstrang eines Kraftfahrzeuges anzugeben.

Die Aufgabe wird erfindungsgemäß durch eine Fliehkraftpendeleinrichtung für einen Antriebsstrang eines Kraftfahrzeuges gemäß Anspruch 1 gelöst.

Weitere vorteilhafte Ausführungsformen sind mit den Unteransprüchen beansprucht und nachfolgend näher erläutert.

Hinsichtlich der Herstellung ist es von Vorteil, wenn der mit Schritt a) bereitgestellte Blechrohling aus einem gehärteten Metall besteht. Vorteilhaft ist es auch, wenn der mit Schritt a) bereitgestellte Blechrohling aus einem (zuvor) ungehärteten Metall besteht.

Vorteilhaft ist es auch, wenn der Blechrohling aus einem Coil (d.h. einem zuvor aufgerollten Metallband) heraus ausgeschnitten wird oder unmittelbar aus diesem Coil / Metallband gebildet wird.

Weiterhin ist es zweckmäßig, wenn der mit Schritt a) bereitgestellte Blechrohling aus einem Stahl, vorzugsweise einem Federstahl, besteht.

Hinsichtlich der Kontur ist es zudem zweckmäßig, wenn diese nach Schritt b) mittels eines Stanzvorganges oder einer Laserschneidvorganges ausgebildet wird. Dadurch wird die Kontur möglichst rasch und präzise fertig gestellt.

Wird das Werkstück in Schritt c) kalt umgeformt, wird der Herstellaufwand besonders einfach gehalten.

Je nach verwendetem Metall / Stahl ist es in einer weiteren Ausführung auch vorteilhaft, wenn das Werkstück in Schritt c) warm umgeformt wird.

In diesem Zusammenhang ist es besonders zweckmäßig, wenn das Werkstück vor Schritt c), vorzugsweise in einem Zwischenschritt (Schritt b')) zwischen Schritt b) und Schritt c), in einem Ofen außerhalb des Umformwerkzeuges auf eine Umformtemperatur erwärmt wird oder (unmittelbar) in dem geschlossenen Umformwerkzeug (vor dem Umformen nach Schritt c)) auf die Umformtemperatur erwärmt wird. Dieser Vorgang ist bei Verwendung eines gehärteten Metalls für den Blechrohling bevorzugt.

Auch ist es von Vorteil, wenn das Werkstück vor Schritt d), vorzugsweise in einem Zwischenschritt (Schritt c')) zwischen Schritt c) und Schritt d), gehärtet wird. Dieser Vorgang ist bei Verwendung eines nicht gehärteten Metalls für den Blechrohling bevorzugt.

Auch betrifft die Erfindung eine Kupplungsscheibe für eine Reibkupplung eines Kraftfahrzeuges, mit dieser Fliehkraftpendeleinrichtung sowie einem mit dem Träger drehfest verbundenen Reibelement.

Auch betrifft die Erfindung einen Antriebsstrang für ein Kraftfahrzeug, mit dieser Fliehkraftpendeleinrichtung, wobei der Träger mit einer Triebwelle drehfest verbunden ist.

Nachfolgend sind nun verschiedene Figuren gezeigt, die sowohl das erfindungsgemäße Herstellverfahren als auch eine Fliehkraftpendeleinrichtung, die eine gewellte Federscheibe hergestellt nach dem Verfahren aufweist, veranschaulichen.

Es zeigen:
- Fig. 1: eine schematische Ansicht eines erfindungsgemäßen Herstellungsverfahrens einer gewellten Federscheibe,
- Fig. 2: eine Längsschnittdarstellung einer Fliehkraftpendeleinrichtung, in der zwei erfindungsgemäß hergestellte Federscheiben eingesetzt sind,
- Fig. 3: eine detaillierte Längsschnittdarstellung der Fliehkraftpendeleinrichtung nach Fig. 1 in einem Bereich, in dem die Federscheiben seitens ihres Befestigungsbereiches mit einem Abstandsbolzen eines Trägers verbunden sind,
- Fig. 4: eine Längsschnittdarstellung der Fliehkraftpendeleinrichtung nach den Fign. 2 und 3, wobei die Schnittebene nun so gewählt ist, dass Federbereiche der Federscheiben zu erkennen sind, die an einem an einer Pendelmasse angeordneten Kontaktelement anliegen,
- Fig. 5: eine Vorderseite einer die Fliehkraftpendeleinrichtung nach Fig. 2 aufweisenden Kupplungsscheibe,
- Fig. 6: eine Seitenansicht der Kupplungsscheibe nach Fig. 5,
- Fig. 7: eine Draufsicht auf eine nach dem Verfahren aus Fig. 1 ausgeformten sowie in der Fliehkraftpendeleinrichtung nach Fig. 2 eingesetzten Federscheibe gemäß einem ersten Ausführungsbeispiel, und
- Fig. 8: eine perspektivische Darstellung einer nach dem Verfahren aus Fig. 1 ausgeformten Federscheibe gemäß einem zweiten Ausführungsbeispiel.

Die Figuren sind lediglich schematischer Natur und dienen ausschließlich dem Verständnis der Erfindung. Die gleichen Elemente sind mit denselben Bezugszeichen versehen. Auch können die unterschiedlichen Merkmale der verschiedenen Ausführungsbeispiele frei miteinander kombiniert werden.

Die Figuren sind lediglich schematischer Natur und dienen ausschließlich dem Verständnis der Erfindung. Die gleichen Elemente sind mit denselben Bezugszeichen versehen. Auch können die unterschiedlichen Merkmale der verschiedenen Ausführungsbeispiele frei miteinander kombiniert werden.

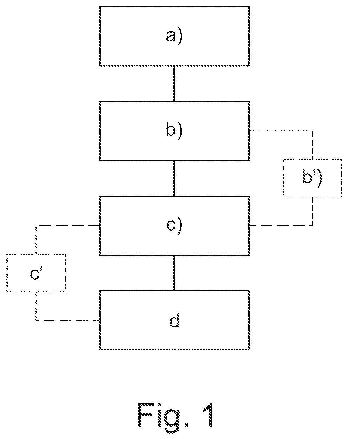

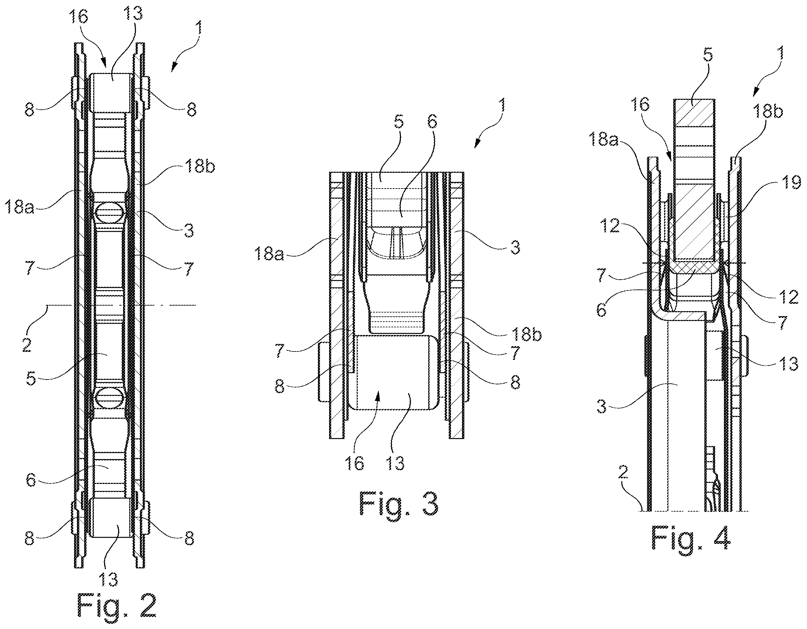

In den Fign. 2 bis 4 ist ein prinzipieller Aufbau der Fliehkraftpendeleinrichtung 1, in der zwei, jeweils nach einem erfindungsgemäßen Herstellverfahren ausgebildete Federscheiben 7 eingesetzt sind, veranschaulicht. Nachfolgend wird zunächst auf den Aufbau und die Funktion dieser Fliehkraftpendeleinrichtung 1 eingegangen, bevor dann das erfindungsgemäße Herstellverfahren nach Fig. 1 erläutert wird.

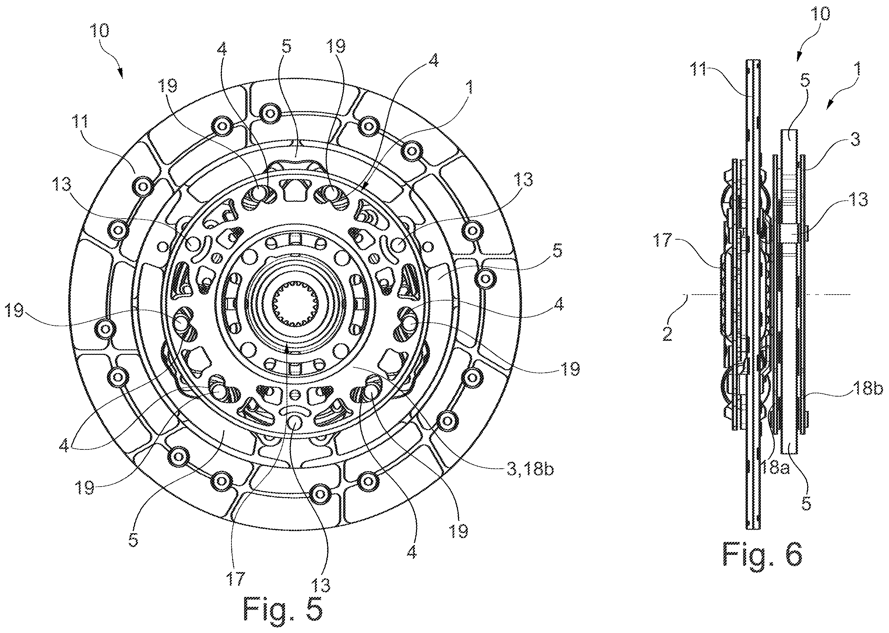

Die Fliehkraftpendeleinrichtung 1 ist in ihrem Betrieb bevorzugt Bestandteil einer mit den Fign. 5 und 6 veranschaulichten Kupplungsscheibe 10 einer Kupplung in Form einer Reibkupplung. Die Fliehkraftpendeleinrichtung 1 ist drehfest mit einer Nabe 17 der Kupplungsscheibe 10 verbunden. Die Nabe 17 ist weiter mit einem Reibelement 11 der Kupplungsscheibe 10 drehfest verbunden. Auch kann die Fliehkraftpendeleinrichtung 1 gemäß weiteren Ausführungen mit einem Flansch / Flanschbereich der Kupplungsscheibe 10 drehfest verbunden sein. Die der Übersichtlichkeit halber nicht weiter dargestellte Kupplung ist auf typische Weise in einem Antriebsstrang eines Kraftfahrzeuges, nämlich zwischen einer Ausgangswelle einer Verbrennungskraftmaschine und einer Eingangswelle eines Getriebes, eingesetzt. Die Fliehkraftpendeleinrichtung 1 ist folglich im Betrieb Teil des Antriebsstranges des Kraftfahrzeuges. Alternativ, gemäß weiteren Ausführungen, ist die Fliehkraftpendeleinrichtung 1 auch direkt an einer Triebwelle des Antriebsstranges, wie der Ausgangswelle der Verbrennungskraftmaschine oder der Getriebeeingangswelle, drehfest angebracht. Die Fliehkraftpendeleinrichtung 1 dient in ihrem Betrieb auf typische Weise dazu, eine in dem Antriebsstrang, insbesondere eine seitens der Verbrennungskraftmaschine erzeugte Drehungleichförmigkeit auszugleichen. Hierzu weist die Fliehkraftpendeleinrichtung 1 den aus der DE 10 2014 211 711 A1 bekannten grundlegenden Aufbau auf.

Die Fliehkraftpendeleinrichtung 1 weist nach Fig. 2 einen Träger 3 auf, der auch als Pendelflansch / Trägerflansch bezeichnet ist. Der Träger 3 ist aus zwei in axialer Richtung beabstandet zueinander gehaltenen Trägerbereichen 18a, 18b aufgebaut. Die beiden Trägerbereiche 18a und 18b sind jeweils als Pendelflansch / Flanschbereich bezeichnet. Jeder Trägerbereich 18a und 18b ist im Wesentlichen scheibenförmig ausgebildet. Der Träger 3 ist um eine Drehachse 2 rotierbar angeordnet. Die Drehachse 2 ist im Betrieb vorzugsweise koaxial mit der Ausgangswelle der Verbrennungskraftmaschine / Getriebeeingangswelle angeordnet. Die beiden Trägerbereiche 18a und 18b sind über Abstandsbolzen 13 drehfest miteinander verbunden. Die Abstandsbolzen 13 legen zudem einen axialen Abstand (entlang der Drehachse 2) der beiden Trägerbereiche 18a und 18b relativ zueinander fest. In Umfangsrichtung des Trägers 3 (in Bezug auf die Drehachse 2) sind mehrere Abstandsbolzen 13 verteilt angeordnet. Die Abstandsbolzen 13 sind in dem jeweiligen Trägerbereich 18a, 18b vernietet, d.h. kraft- und formschlüssig mit dem Trägerbereich 18a, 18b verbunden.

In dem durch die Trägerbereiche 18a, 18b gebildeten (axialen) Innenraum 16 des Trägers 3 sind mehrere in Umfangsrichtung verteilt angeordnete Pendelmassen 5 relativ zu dem Träger 3 bewegbar / pendelbar angeordnet. Wie in der Ansicht nach Fig. 5 zu einer Vorderseite der Fliehkraftpendeleinrichtung 1 zu erkennen, weist jede Pendelmasse 5 zwei Führungsbolzen 19 auf, die jeweils in Kulissenbahnen 4 des Trägers 3 hinein ragen. Je Führungsbolzen 19 einer Pendelmasse 5 weist sowohl der erste Trägerbereich 18a als auch der zweite Trägerbereich 18b eine Kulissenbahn 4 auf (in Fig. 5 für den zweiten Trägerbereich 18b repräsentativ dargestellt). Die einem Führungsbolzen 19 zugeordneten Kulissenbahnen 4 der beiden Trägerbereiche 18a, 18b bilden jeweils eine Führungskulisse für diesen Führungsbolzen 19 aus. Die Kulissenbahnen 4 erstrecken sich in Umfangsrichtung betrachtet gebogen (d.h. sowohl in Umfangsrichtung als auch in radialer Richtung). Insbesondere erstrecken sich die Kulissenbahnen 4 jeweils U-förmig in Umfangsrichtung. Somit führt die Pendelmasse 5 im Betrieb bei einer auftretenden Drehungleichförmigkeit auf gewohnte Weise eine Pendelbewegung durch, welche Pendelbewegung ein der Drehungleichförmigkeit entgegen gerichtetes Rückstellmoment erzeugt.

Fig. 3 zeigt, dass an der jeweiligen Pendelmasse 5 ein Kontaktelement 6 anliegt, wobei das Kontaktelement 6 in axialer Richtung mittels zweier gewellter Federscheiben 7 an die Pendelmasse 5 angedrückt ist. Das Kontaktelement 6 ist im Querschnitt betrachtet im Wesentlichen U-förmig ausgebildet. Das somit eine sich in Umfangsrichtung erstreckende Rinnenstruktur ausbildende Kontaktelement 6 ist in radialer Richtung nach außen geöffnet und von einer radialen Innenseite an der jeweiligen Pendelmasse 5 angebracht. Das Kontaktelement 6 liegt somit in radialer Richtung von innen an der Pendelmasse 5 an und ist gleichzeitig zu den jeweils axial abgewandten Seiten an der Pendelmasse 5 abgestützt. Das Kontaktelement 6 ist aus einem Kunststoff hergestellt. Das Kontaktelement 6 ist so an der Pendelmasse 5 aufgenommen, dass es sich in Umfangsrichtung relativ zu der Pendelmasse 5 verschieben lässt.

Eine (erste) Federscheibe 7 ist zu einer ersten axialen Seite der Pendelmasse 5 hin axial zwischen dem ersten Trägerbereich 18a und der Pendelmasse 5 / der ersten axialen Seite des Kontaktelementes 6 angeordnet. Eine weitere (zweite) Federscheibe 7 ist zu einer zweiten axialen Seite der Pendelmasse 5 hin axial zwischen dem zweiten Trägerbereich 18b und der Pendelmasse 5 / der zweiten axialen Seite des Kontaktelementes 6 angeordnet. Die jeweilige Federscheibe 7 dient zum Andrücken des Kontaktelementes 6 an die Pendelmasse 5 bzw. zum Vorpannen des Kontaktelementes 6 relativ zu dem Träger 3 gegen die Pendelmasse 5. Da die beiden Federscheiben 7 in ihrer Anordnung und Abstützung seitens des Kontaktelementes 6 (in Bezug auf eine senkrecht zu der Drehachse 2 ausgerichtete Spiegelebene) spiegelsymmetrisch ausgebildet sind, ist nachfolgend lediglich auf die erste Federscheibe 7 der Kürze wegen eingegangen. Somit ist eine Reibeinrichtung durch das Kontaktelement 6 und die Federscheiben 7 zur Verfügung gestellt, die zwischen jeder Pendelmasse 5 und dem Träger 3 wirkt, um die Relativbewegung (Pendelbewegung) der Pendelmassen 5 zu dem Träger 3 zu hemmen / dämpfen.

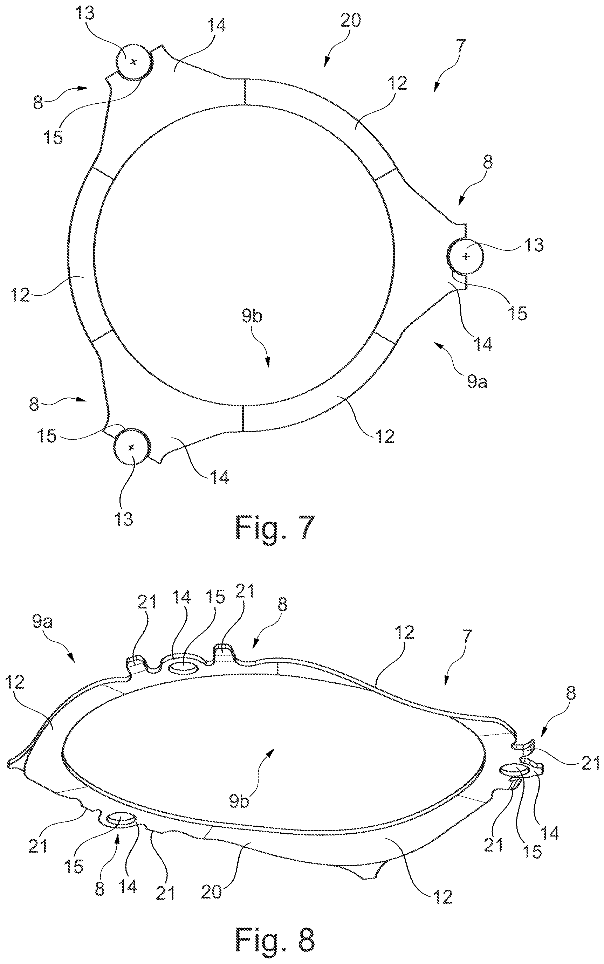

Die Federscheibe 7 stützt sich mit mehreren in Umfangsrichtung verteilten gewellten Federbereichen 12 in axialer Richtung an dem Kontaktelement 6 ab. Wie in Fig. 7 und in Fig. 8 für das zweite Ausführungsbeispiel zu erkennen, weist die Federscheibe 7 einen (ringförmig umlaufenden) Ringabschnitt 20 auf, der die Federbereiche 12 unmittelbar mit ausbildet. Die Federscheibe 7 weist in Umfangsrichtung gesehen drei Federbereiche 12 auf. Jeder Federbereich 12 ist in axialer Richtung gewellt, d.h. bildet eine in axialer Richtung vorstehende Welle aus. Der jeweilige Federbereich 12 ist gar derart gewellt, dass seine Wellungshöhe am Außendurchmesser höher ist als die Wellungshöhe am Innendurchmesser. Der jeweilige Federbereich 12 erstreckt sich in axialer Richtung gesehen somit an seiner radialen Außenseite weiter axial als an seiner radialen Innenseite.

Jeder Federbereich 12 ist in einem Umfangsbereich einer Pendelmasse 5 an dem Kontaktelement 6 abgestützt. In Umfangsrichtung zwischen je zwei benachbarten Federbereichen 12 ist ein Befestigungsbereich 8 der Federscheibe 7 vorgesehen, welcher Befestigungsbereich 8 mit dem Abstandsbolzen 13 fest verbunden ist. Die Befestigungsbereiche 8 der ersten Federscheibe 7 stützen sich axial an dem ersten Trägerbereich 18a ab; die Befestigungsbereiche 8 der zweiten Federscheibe 7 stützen sich axial an dem zweiten Trägerbereich 18b ab. Die Federbereiche 12 bilden zusammen mit den Befestigungsbereichen 8 den Ringabschnitt 20 der jeweiligen Federscheibe 7 aus.

Wie weiterhin in Fig. 7 zu erkennen, sind die drei Befestigungsbereiche 8 jeweils gegenüber den Federbereichen 12 im Wesentlichen flach / eben / ungewellt ausgeformt. Die Federscheibe 7 ist in axialer Richtung so zwischen dem Träger 3 und dem Kontaktelement 6 eingespannt, dass sie mit einer bestimmten Axialkraft auf das Kontaktelement 6 und dieses wiederum mit einer bestimmten Axialkraft gegen die Pendelmasse 5 drückt. Dadurch wird im Betrieb bei der Relativbewegung der Pendelmasse 5 zu dem Kontaktelement 6 eine gezielte Reibung erzeugt.

In dem ersten Ausführungsbeispiel der Federscheibe 7 nach den Fign. 2 bis 7 ist der Befestigungsbereich 8 jeweils durch eine in radialer Richtung von dem Federbereich 12 aus abstehende Verbindungslasche 14 des Ringabschnittes 20 unmittelbar mit ausgeformt. Hierbei ist ersichtlich, dass die jeweilige Verbindungslasche 14 einen Verdickungsbereich der Federscheibe 7 bildet. Die Verbindungslasche 14 geht in Umfangsrichtung gesehen kontinuierlich / allmählich in den Federbereich 12 über. Dadurch wird eine Kerbwirkung im Betrieb reduziert.

In der Verbindungslasche 14 ist ein Aufnahmeloch 15 eingebracht. Dieses Aufnahmeloch 15 durchdringt den Befestigungsbereich 8 in axialer Richtung gesehen. Das Aufnahmeloch 15 ist in dem ersten Ausführungsbeispiel in Form einer in radialer Richtung nach außen geöffneten Kerbe / Ausnehmung ausgebildet. Das Aufnahmeloch 15 weist somit einen halbkreisförmigen Querschnitt auf. Der jeweilige Befestigungsbereich 8 ist mit seinem Aufnahmeloch 15 auf einfache Weise radial von innen an dem Abstandsbolzen 13, unter Ausbilden einer in Umfangsrichtung wirkenden formschlüssigen Verbindung, eingehängt. Es sind jedoch auch weitere kraft-, form- und/oder stoffschlüssige Verbindungen denkbar.

Die Federscheibe 7 weist gesamtheitlich gesehen eine radiale Innenkontur 9b, die im Wesentlichen kreisförmig ausgestaltet ist, sowie eine radiale Außenkontur 9a auf. Die radiale Außenkontur 9a ist in dem ersten Ausführungsbeispiel so ausgestaltet, dass sie die Befestigungsbereiche 8 (mit deren Aufnahmelöchern 15) ausbildet.

Fig. 8 zeigt die Federscheibe 7 gemäß einem zweiten Ausführungsbeispiel, wobei sich diese Federscheibe 7 gegenüber dem ersten Ausführungsbeispiel hinsichtlich ihrer Befestigungsbereiche 8 unterscheidet. Die Befestigungsbereiche 8 weisen dabei ein kreisförmiges Aufnahmeloch 15, d.h. ein von einem vollständig umlaufenden Lochleibungsbereich gebildetes Aufnahmeloch 15, auf. Zudem bildet jeder Befestigungsbereich 8 zwei Haltenasen 21 aus, die drehfest seitens des Trägers 3 abgestützt sind. Die Haltenasen 21 stehen in radialer Richtung nach außen sowie in einer gemeinsamen axialen Richtung ab. Dadurch unterscheiden sich die Außenkonturen 9a in den beiden Ausführungsbeispielen der Fign. 7 und 8 voneinander.

In Fig. 1 ist ein erfindungsgemäßes Verfahren zum Herstellen der Federscheibe 7 der Fig. 7 und der Federscheibe 7 der Fig. 8 veranschaulicht. Erfindungsgemäß wird die Federscheibe 7 in einem Verfahren mit folgenden Schritten hergestellt: In einem ersten Schritt a) wird ein Blechrohling bereitgestellt. Dieser Blechrohling besteht bevorzugt aus einem Federstahl. In einem weiteren Schritt b) wird eine Kontur, d.h. die radiale Innenkontur 9b sowie die radiale Außenkontur 9a der Federscheibe 7 fertig ausgebildet. Die Innenkontur 9b sowie die Außenkontur 9a werden hierzu aus dem Blechrohling ausgestanzt, alternativ auch ausgeschnitten. Das damit hergestellte ringförmige Werkstück wird in einem weiteren Schritt c) umgeformt. Hierbei wird das Werkstück in ein geschlossenes Umformwerkzeug gelegt und so umgeformt, dass die gewellten Federbereiche 12 der Federscheibe 7 entstehen. Dadurch ist bereits die äußere Form der Federscheibe 7 realisiert. In einem abschließenden Schritt d) wird das Werkstück entspannungsgeglüht, unter Ausbildung der fertigen Federscheibe 7.

In diesem Zusammenhang sei darauf hingewiesen, dass nach einer weiteren Ausführung in Schritt a) ein gehärtetes (alternativ auch ein nicht gehärtetes) Blech / Metallblech verwendet wird. Die Kontur 9a, 9b wird nach Schritt b) bevorzugt gestanzt, alternativ gemäß einer weiteren bevorzugten Ausführung lasergeschnitten. In Schritt c) wird das Werkstück kalt umgeformt oder weiter bevorzugt warm umgeformt.

Zudem wird in einer weiteren Ausführung zwischen Schritt b) und Schritt c), in einem Zwischenschritt b'), bei einem Warmumformen des Werkstückes in Schritt c), auf eine Umformtemperatur (Austenitisierungstemperatur) gebracht. Dieses Erwärmen des Werkstückes auf die Umformtemperatur findet bevorzugt in einem Ofen, weiter bevorzugt direkt in dem geschlossenen Umformwerkzeug statt.

In einem optionalen Schritt c') zwischen Schritt c) und Schritt d) wird in einer weiteren Ausführung das Werkstück zusätzlich einem Härtevorgang unterzogen.

In diesem Zusammenhang haben sich folgende drei Ausführungen 1 bis 3 des Verfahrens als besonders vorteilhaft herausgestellt.

### Ausführung 1:

Das Herstellverfahren zum Herstellen der Federscheibe 7 wird durch folgende Schritte (vollständig) durchgeführt: a) Bereitstellen des Blechrohlings als ein gehärtetes Blech (*I* aus einem gehärteten Metall); b) Stanzen oder Laserschneiden der Kontur 9a, 9b, unter Ausbildung des ringförmigen Werkstückes (auch als Platine bezeichnet); c) Kaltumformen des Werkstückes im geschlossenen Umformwerkzeug; sowie d) Entspannungsglühen des Werkstückes.

In anderen Worten ausgedrückt, wird bei der Ausführung 1 folglich zunächst ein gehärtetes Blechband (Blechrohling), zumeist aufgerollt zu einem Coil, bereitgestellt (Schritt a)). Anschließend (in Schritt b)) wird aus dem Band mittels Stanzen in einem oder mehreren Hüben oder mittels Laserschneiden die gewünschte Kontur 9a, 9b der Wellscheibe 7 erzeugt. Danach wird die Platine in einem geschlossenen Werkzeug (Umformwerkzeug) in einem oder mehreren Umformschritten zur fertig aufgestellten Wellscheibe 7 kaltumgeformt (Schritt c)). Es folgt ein Entspannungsglühen im Ofen oder im geschlossenen Härtewerkzeug (Schritt d)).

### Ausführung 2:

Das Herstellverfahren zum Herstellen der Federscheibe 7 wird durch folgende Schritte (vollständig) durchgeführt: a) Bereitstellen des Blechrohlings als ein gehärtetes Blech (/ aus einem gehärteten Metall); b) Stanzen oder Laserschneiden der Kontur 9a, 9b, unter Ausbildung des ringförmigen Werkstückes (auch als Platine bezeichnet); b') Erwärmen der Platine auf eine geeignete Umformtemperatur in einem Ofen (außerhalb des geschlossenen Umformwerkzeuges) oder im geschlossenen Umformwerkzeug; c) Warmumformen der Platine im geschlossenen Umformwerkzeug; sowie d) Entspannungsglühen des Werkstückes.

In anderen Worten ausgedrückt, wird bei der Ausführung 2 folglich zunächst ein gehärtetes Blechband (Blechrohling), zumeist aufgerollt zu einem Coil, bereitgestellt. Anschließend (in Schritt b)) wird aus dem Band mittels Stanzen in einem oder mehreren Hüben oder mittels Laserschneiden die gewünschte Kontur 9a, 9b der Wellscheibe 7 erzeugt. Danach (in Schritt b')) wird die Platine im Ofen auf die geeignete Umformtemperatur, bevorzugt die Austenitisierungstemperatur des Werkstoffes, erwärmt. Es folgt (in Schritt c)) das Warmumformen in einem geschlossenen Werkzeug (Umformwerkzeug) in einem oder mehreren Umformschritten zur fertig aufgestellten Wellscheibe 7. Im Anschluss wird die Wellscheibe 7 an der Umgebungsluft abgekühlt und spannungsarm geglüht (Schritt d)).

### Ausführung 3:

Das Herstellverfahren zum Herstellen der Federscheibe 7 wird durch folgende Schritte (vollständig) durchgeführt: a) Bereitstellen des Blechrohlings als ein nicht gehärtetes Blech (/ aus einem nicht gehärteten Metall); b) Stanzen oder Laserschneiden der Kontur 9a, 9b, unter Ausbildung des ringförmigen Werkstückes (auch als Platine bezeichnet); c) Kaltumformen der Platine im geschlossenen Umformwerkzeug; c') Härten des Werkstückes mittels eines geeigneten Härtevorganges; sowie d) Entspannungsglühen des Werkstückes.

In anderen Worten ausgedrückt, wird bei der Ausführung 3 folglich zunächst ein nicht gehärtetes Blechband (Blechrohling), zumeist aufgerollt zu einem Coil, bereitgestellt (Schritt a)). Anschließend (in Schritt b)) wird aus dem Band mittels Stanzen in einem oder mehreren Hüben oder mittels Laserschneiden die gewünschte Kontur 9a, 9b der Wellscheibe 7 erzeugt. Danach (in Schritt c)) wird die Platine in einem geschlossenen Werkzeug (Umformwerkzeug) in einem oder mehreren Umformschritten zur fertig aufgestellten Wellscheibe 7 kaltumgeformt. Im Anschluss wird die Wellscheibe 7 mit einem geeigneten, gängigen Härteverfahren gehärtet (Schritt c')) und spannungsarm geglüht (Schritt d)).

Die Federscheibe 7 ist bei den Ausführungen 1 bis 3 jeweils aus einem Stahl, vorzugsweise aus einem Federstahl, wie einem C75S oder 58CrV4, hergestellt.

Somit betrifft die Erfindung eine Wellscheibe 7 für eine Fliehkraftpendeleinrichtung 1, wobei die Wellscheibe 7 vom Träger 3 aus eine Kraft auf ein Reibelement oder Kontaktelement 6, vorzugsweise aus Kunststoff, ausübt, welches die Pendelmassen 5 stellenweise oder vollständig umhüllt, so dass bei einer Bewegung der Pendelmassen 5 relativ zum Träger 3 eine konstante Reibkraft gegen die Bewegungsrichtung entsteht. Die Wellscheibe 7 ist in ihrer Form ringförmig und geschlossen. Die Wellscheibe 7 weist drei gleichmäßig am Umfang verteilte Wellungen (Federbereiche 12) auf. Sie weist ebenso eine Wellungshöhe auf, wobei die Wellungshöhe am Außendurchmesser höher ist als die Wellungshöhe am Innendurchmesser. Des Weiteren weist die Wellscheibe 7 radial oder axial über den geschlossenen Ring (Ringabschnitt 20) hinausragende Elemente (Verbindungslasche 14 und/oder Haltenase 21) auf, die zum Positionieren, zum Zentrieren und zur Kraftübertragung verwendet werden.

## Patentansprüche

1. Fliehkraftpendeleinrichtung (1) für einen Antriebsstrang eines Kraftfahrzeuges, mit einem um eine Drehachse (2) drehbaren Träger (3), einer derart an dem Träger (3) entlang einer Kulissenbahn (4) pendelbar aufgenommenen Pendelmasse (5), dass durch die Pendelmasse (5) im Betrieb ein einer Drehungleichförmigkeit entgegen gerichtetes Rückstellmoment erzeugt ist, einem an der Pendelmasse (5) relativverschieblich anliegenden Kontaktelement (6) sowie einer, das Kontaktelement (6) in einer axialen Richtung der Drehachse (2) an die Pendelmasse (5) andrückenden, gewellten Federscheibe (7) hergestellt nach einem Verfahren mit folgenden Schritten:
a) Bereitstellen eines Blechrohlings,
b) Ausbilden einer Kontur (9a, 9b) der zu fertigenden Federscheibe (7) aus dem Blechrohling, unter Ausbildung eines ringförmigen Werkstückes,
c) Umformen des Werkstückes in einem geschlossenen Umformwerkzeug derart, dass ein in axialer Richtung gewellter Federbereich (12) der Federscheibe (7) entsteht, wobei ein ringförmig umlaufender Ringabschnitt (20) den gewellten Federbereich (12) unmittelbar mit ausbildet, sowie
d) Entspannungsglühen des Werkstückes unter Ausbilden der Federscheibe (7),
wobei die Federscheibe (7) an einem Befestigungsbereich (8) drehfest mit dem Träger (3) verbunden ist.

2. Kupplungsscheibe (10) für eine Reibkupplung eines Kraftfahrzeuges, mit einer Fliehkraftpendeleinrichtung (1) nach Anspruch 1 sowie einem mit dem Träger (3) drehfest verbundenen Reibelement (11).

3. Antriebsstrang für ein Kraftfahrzeug, mit einer Fliehkraftpendeleinrichtung (1) nach Anspruch 1, wobei der Träger (3) mit einer Triebwelle drehfest verbunden ist.

## Claims

1. Centrifugal pendulum device (1) for a drive train of a motor vehicle, comprising a support (3) rotatable about a rotational axis (2), a pendulum mass (5) received on the support (3) so as to be pendulable along a guide track (4) in such a way that, during operation, a restoring torque directed against rotational irregularity is generated by the pendulum mass (5), a contact element (6) bearing against the pendulum mass (5) in a relatively displaceable manner, as well as a corrugated spring washer (7), pressing the contact element (6) against the pendulum mass (5) in an axial direction of the rotational axis (2), produced by a method with the following steps:
a) providing a sheet blank,
b) forming a contour (9a, 9b) of the spring washer (7) to be manufactured from the sheet blank, while forming an annular workpiece,
c) forming the workpiece in a closed forming tool such that a corrugated spring region (12) of the spring washer (7) is created in the axial direction, wherein an annularly circumferential ring section (20) directly co-forms the corrugated spring region (12), and
d) stress-relief annealing the workpiece while forming the spring washer (7),
wherein the spring washer (7) is connected to the support (3) in a rotationally fixed manner at a fastening region (8).

2. Clutch disk (10) for a friction clutch of a motor vehicle, comprising a centrifugal pendulum device (1) according to claim 1 as well as a friction element (11) connected to the support (3) in a rotationally fixed manner.

3. Drive train for a motor vehicle, comprising a centrifugal pendulum device (1) according to claim 1, wherein the support (3) is connected to a drive shaft in a rotationally fixed manner.

## Revendications

1. Dispositif pendulaire centrifuge (1) pour une chaîne cinématique d'un véhicule automobile, comprenant un support (3) pouvant tourner autour d'un axe de rotation (2), une masse pendulaire (5) reçue de manière pendulaire sur le support (3) le long d'une trajectoire de coulisse (4) de telle sorte qu'en fonctionnement, la masse pendulaire (5) génère un couple de rappel dirigé à l'encontre d'une irrégularité de rotation, un élément de contact (6) appliqué de manière à pouvoir se déplacer relativement sur la masse pendulaire (5), ainsi qu'une rondelle ressort ondulée (7), pressant l'élément de contact (6) contre la masse pendulaire (5) dans une direction axiale de l'axe de rotation (2), fabriquée selon un procédé comportant les étapes suivantes :
a) mise à disposition d'une ébauche de tôle,
b) formation d'un contour (9a, 9b) de la rondelle ressort (7) à fabriquer à partir de l'ébauche de tôle, avec formation d'une pièce annulaire,
c) mise en forme de la pièce dans un outil de formage fermé de telle sorte qu'une zone ressort ondulée (12) de la rondelle ressort (7) soit formée dans la direction axiale, un tronçon annulaire circulaire (20) formant immédiatement également la zone ressort ondulée (12), ainsi que
d) recuit de détente de la pièce avec formation de la rondelle ressort (7),
la rondelle ressort (7) étant liée au support (3) de manière non rotative au niveau d'une zone de fixation (8).

2. Disque d'embrayage (10) pour un embrayage à friction d'un véhicule automobile, comprenant un dispositif pendulaire centrifuge (1) selon la revendication 1 ainsi qu'un élément de friction (11) lié de manière non rotative au support (3).

3. Chaîne cinématique pour un véhicule automobile, comprenant un dispositif pendulaire centrifuge (1) selon la revendication 1, le support (3) étant lié de manière non rotative à un arbre d'entraînement.
